# EUROPEAN PATENT APPLICATION

(11) **EP 3 848 191 A1**
(43) Date of publication of application: **14.07.2021**
(21) Application number: 20150576.5
(22) Date of filing: 07.01.2020
(51) Int. Cl.: B29D 30/38, B29B 15/12, D06M 15/564, D06M 13/395

(54) **REINFORCEMENT MATERIAL AND ELASTOMERIC PRODUCT REINFORCED THEREWITH**

(71) Applicant: Glanzstoff Industries A.G., 8452 Steinfort (LU)
(72) Inventor: HERRERO ACERO, Enrique, 1190 Wien (AT)
(74) Representative: Leinweber & Zimmermann

(57) **Abstract**

Reinforcement material, in particular tire cord or tire cord fabric, for an elastomeric product, comprising a reinforcing fiber construction and a transition zone material to be arranged and to form a transition zone between the fiber construction and a rubber matrix of the product and comprising a first substance to enable, via vulcanization, a first anchorage to the rubber matrix of the product and being in coupling contact with a second substance providing a second anchorage to the fiber construction, wherein the coupling contact is a coupling contact made with already established second anchorage.

## Description

The invention is related to a reinforcement material, in particular tire cord or tire cord fabric, for an elastomeric product, comprising a reinforcing fiber construction and a transition zone material to be arranged and to form a transition zone between the fiber construction and a rubber matrix of the product and comprising a first substance to enable via vulcanization a first anchorage to the rubber matrix of the product and being in coupling contact with a second substance providing a second anchorage to the fiber construction in accordance with the preamble of claim 1, and an elastomeric product reinforced by such reinforcement material, in particular a pneumatic vehicle tire, as well as a method to produce such reinforcement material.

Reinforcement materials having said features of the preamble of claim 1 are known in the art, for instance from DE 10 2007 025 490 A1. In DE 10 2007 025 490 A1, the reinforcing fiber construction of the reinforcement material is made from hybrid cords, in which a first yarn of the hybrid cord is of aramid, while another yarn of the hybrid cord is a polyester yarn, for instance a PET-yarn or a PEN-yarn. Between said hybrid cord (fiber construction) and the elastomeric product, for instance a tire, is provided a RFL-dip which forms, as transition zone material, a transition zone between the hybrid cord and the rubber matrix. The role of the RFL-dip is to provide a strong bonding between the textile cord and the rubber in order to guarantee structural integrity of the tire in use and to avoid separation of the cord from the rubber.

Such resorcinol formaldehyde latex (RFL) systems applied before vulcanization are the widely accepted standard systems for forming such transition zone between on the one hand the highly elastic rubber of the elastomeric product and on the other hand the reinforcing fiber construction having high strength and low elongation properties to provide reinforcement, and forms the common industrial standard since about nearly 80 years.

While such RFL-treatments providing the transition zone may somewhat differ in formulation and application, the adhesion technique is always the same. The latex (L) compound is a substance providing for the anchorage to the rubber matrix, and methanol groups (resole) formed via the formaldehyde (F) on the resorcinol (R) provide, via a condensation reaction with polymeric cords of the reinforcing fiber construction, the anchorage to the fiber construction. Usually, a dip solution comprising the subsequently added parts resorcinol, formaldehyde, and latex is allowed to mature for about roughly 24 hours before application to the reinforcing fiber construction, providing coupling between the latex and the resole- carrying resorcinol. In case of considerably sufficient reactivity of the fiber(s), like for nylon or cellulose (rayon), the resole couples directly to the fiber. In case of low reactivity of fiber material, like for polyester or aramid, the resole may couple indirectly to the fiber via for instance epoxy groups introduced in form of epoxides as intermediate (pre-dip) layer, such intermediate layer providing the necessity of an additional pre-dip (step) in addition to the (already time-consuming) RFL-dip preparation and application.

While there have been efforts to replace the RFL-dip by alternative dips in view of environmental and/or health concerns resulting from in particular the formaldehyde ingredient, as for instance disclosed in WO 2014/091376 A1, generally, in said alternatives, the measures taken to avoid or reduce the amount of resorcinol and formaldehyde negatively affect the adhesion strength. In view of these difficulties, the alternative approaches did not change the industrial behavior and the use of RFL-dips as industrial standard.

There also have been attempts of alternative approaches for providing better adhesion of the RFL-dip to the fiber constructions. Wet chemistry methods using highly concentrated acid or alkali as well as plasma treatments were used as surface treatments to increase the reactivity of the polymeric surface of the reinforcing fiber construction by increase of their hydrophilicity. However, conventional plasma treatments resulted also in bulk effects (fiber etching involving morphological and topological changes), negatively affecting the reinforcing effect of the reinforcing fiber construction, e.g. breaking force and tenacity. To avoid this negative effect, it was proposed to replace the plasma treatment by an enzymatic treatment of the polymeric fibers to increase the number of functional groups at their surface, for instance with laccase, which is described in DE 10 2016 011 645 A1. It was even proposed to achieve the same effect without enzymes, but by use of actuators as VLA, HBT, or TEMPO, and by applying a voltage to charge said actuators, this approach being disclosed in European patent application No. 18 215 266.

While these and other attempts still make use of the RFL-dip for providing the transition zone by the RFL-dip or dips with replacement chemicals for resorcinol/formaldehyde, as disclosed in EP 2 371 882 B1, new approaches consider to solve the underlying problem at its origin by direct coupling without transition zone, going versus no-dip solutions by only using a modified plasma treatment as the atmospheric pressure non-equilibrium plasma treatment, a technology described f.i. in "Fanelli Fracassi", surface&coatings technology 322 (2017), 174-201. With said modified plasma treatment involving for instance pyrrole or acetylene or halogenated hydrocarbons, reactivity of the surface of the reinforcing fiber construction is enhanced such as to enable direct coupling between the rubber matrix of the elastomeric product and the plasma-treated fiber construction, thereby eliminating the need of (multiple) dip systems to gain adhesion.

For the RFL-dip technology, an often used formaldehyde to resorcinol ratio is about 2:1, while for the resin/latex ratio 15-20/100 is often used.

While all the above described solutions providing adhesion between the elastomeric matrix and the reinforcing fiber construction may have their own respective strengths and weaknesses, it is an object of the present invention to provide a reinforcement material which combines reasonable adhesion properties with reasonable performance properties of thereby reinforced elastomeric products under consideration of environmental concerns.

To this end, the invention provides a reinforcement material according to the initially introduced type, which is essentially characterized in that the coupling contact is a coupling contact made with already established second anchorage. Thereby, the invention favorably allows a smooth transition between different properties, in particular the different modulus of rubber matrix and fiber construction involving an intermediate modulus in the transition zone on the one hand side without influence of the forming of the second anchorage, allowing the reduction or avoidance of resorcinol and/or formaldehyde and still the avoidance of multiple dipping steps.

The reinforcing character of the fiber material is mainly effected by the structure of the cord consisting of several filaments being twisted together. Besides such more or less linear cord structures (so called "single end cords"), cords can also be used in the form of laminar structures, e.g. as woven structures (so called "fabric"). The wording "fiber construction" is meant to encompass linear as well as more complex structures as fabrics and including the ones discussed below.

The filaments, preferably textile filaments, can be made of different types of synthetic high-tenacity polymeric fibers like e.g. polyesters such as polyethylene terephthalate (PET) or polyethylene naphthalene (PEN), aromatic or aliphatic polyamides like Aramid or Nylon, respectively, but also of regenerated cellulose fibers. Non-textile materials like steel fibers, carbon fibers or glass fibers can also be taken into consideration as reinforcing material addition. Fiber blends e.g. commingled yarns or hybrid constructions of different fiber types can also be used as well as monofilament constructs of one fiber type wrapped with filaments of another fiber type. Depending on the different chemical structure of the polymer fibers, those reinforcement materials can be selected according to desired reinforcement properties, as known to the skilled artisan. Regarding fiber materials and their reinforcing properties as tensile strength of more than 30, in particular more than 40 cN/tex and modulus, reference is made for instance to Walter Loy, Chemiefasern für technische Textilprodukte, Deutscher Fachverlag GmbH, pages 214 to 216; pages 84 to 90 and pages 21 to 23, incorporated herewith by reference.

In a preferred embodiment, a density difference (density of the second - density of the first substance) in the transition zone decreases from the fiber material of the fiber construction to the outer surface of the reinforcement material. This provides a better rate of adhesion per substance used and, therefore, a more effective adhesion.

In a preferred embodiment, the reinforcement material comprises in particular only one boundary between the fiber material of its fiber construction and its outer surface, which results from a dip-wetting. Such dip-wetting provides a good uniformity of the distribution of the transition zone, thereby improving the avoidance of harsh transition between different material properties.

In this context, the transition zone material preferably extends to regions at the fiber material of the fiber construction with an average density of the second anchorage being less than half of the average density of the density distribution of the second anchorage at the outer surface of the fiber construction. This further increases the balancing effect of the transition zone.

In a preferred embodiment, the second substance comprises at least two, preferably two separated docketing areas. Thereby, even if one docketing area of the second substance is used for the second anchorage, another can still improve the coupling contact to the first substance.

In a preferred embodiment, the second anchorage is made via atmospheric plasma polymerization. Thereby, a firm bonding is provided between the second substance and the reinforcing fiber. "Atmospheric" thereby means within a pressure range around atmospheric pressure. Preferably, the pressure is not larger/lower than 30%, in particular 15% more/less of normal atmospheric pressure (1 atm), with preferably slight overpressure.

In a further preferred embodiment, the second substance is contained in a precursor or is a precursor of the plasma treatment. Thereby, the second substance may be provided in a controlled manner without negatively influencing the bulk of the reinforcing fibers, and the manufacture is simplified. The precursor is preferably introduced in form of an aerosol.

Moreover, the use of atmospheric plasma has relatively low energy input needed and no high pressure or - on the other hand - no vacuum and therefore no specific installation regarding pressure or vacuum generation is needed, allowing plasma generation at low temperature, from room temperature to 250° C. Temperature of the plasma treatment is preferred around room temperature, at least not more than 50°C, in particular 20°C above. What is preferably used is the plasma-assisted polymerization and deposition of organic precursor substance(s) containing the second substance onto the fiber surface.

One preferred way to generate atmospheric plasma is via dielectric barrier discharges (DBD) whereby - preferably either in a cylindrical or in a rectangular arrangement - at least two concentric or parallel electrodes are separated by a gap of some millimeters and a dielectric barrier is disposed between the electrodes. A power source is providing alternating current (ac) voltage to the electrodes with the effect that a dielectric barrier discharge takes place between the dielectric barrier and the inner electrode. The electrical power applied is in the range of between 20 and 500 W, preferably between 50 and 450 W. The generation of the atmospheric plasma typically occurs in the presence of an oxidizing or non-oxidizing gas ("plasma gas"), like N2, Ar, He, Ne, O2, CO2, O2, N2O, CF4, SF6, or mixtures thereof. Preferably, the gas is non-oxidizing and/or free of oxygen, e.g. N₂, Ar, He or Ne or a combination thereof with total percentage of preferably more than 98%. The plasma gas is feed to the plasma reactor and is being excited by the electric discharge which results in a conversion to the plasma state. The plasma propagates through the elongated space through which the plasma gas is feed, towards the lower open end of the plasma reactor where it can be ejected through a nozzle to treat the tire cord. An example of a device usable for this invention is disclosed in WO 2006081637 A1. Other ways as DBD can be used, as corona discharge/atmospheric plasma jets.

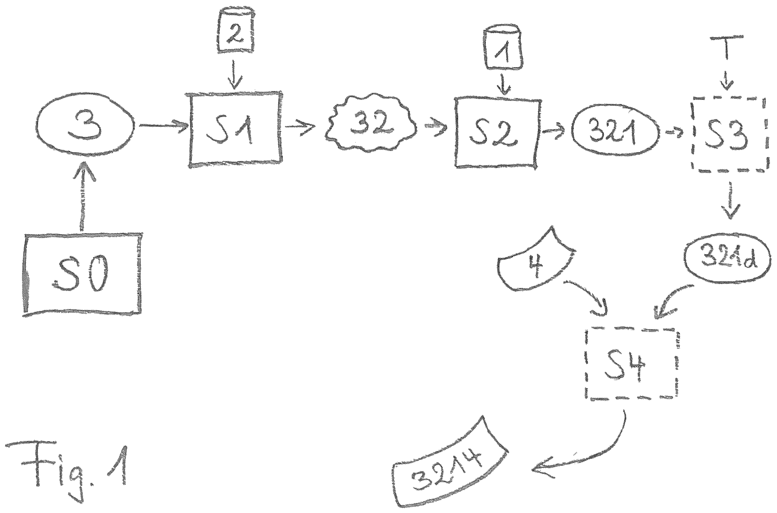

The purpose of the plasma treatment goes beyond only some cleaning or activation steps, by using the vaporized precursor and treating the surface of the fiber construction with the precursor in the plasma stream. However, a cleaning treatment by a preceding atmospheric plasma treatment may be performed prior to the application of the precursor. The precursor molecules activated by the plasma get in contact with the fiber construction at its surface and reacts therewith to be anchored to said surface under formation of covalent bonds. The precursor may be mixed with the carrier gas before being fed into the plasma chamber (direct mode). However, it can also be fed into the afterglow of the plasma (remote mode). Further, atmospheric pressure non-equilibrium plasma treatment as explained in "Fanelli Fracassi" with reference to Fig. 1, Fig. 2, Fig. 3, and Fig. 4 therein is incorporated by reference, regarding the step of application of the second substance.

The flow rate of the plasma gas is preferably between 1 and 100 slm, preferably between 40 and 90 slm, most preferably between 50 and 80 slm. The application of the plasma gas may be in one or more passes, preferably less than 11, in particular less than 7 passes.

In a preferred embodiment, the plasma generated via DBD has a temperature < 100°C ("cold plasma"). In a most preferred embodiment, plasma generation is performed at room temperature.

In a preferred embodiment, the precursor contains or is and/or the second substance is made of poly-isocyanate, in particular di-isocyanate or another substance able to form or contribute to the forming of urethane bonds or hydroxy urethane bonds for the second anchorage and/or the coupling contact. Thereby, both a satisfyingly strong second anchorage as well as sufficiently strong coupling to the first substance is obtained. The precursor may contain usual components such as a solvent, f.i. ethyl acetate.

In a further preferred embodiment, the precursor is does not contain halogenated hydrocarbons. This further improves handling of the process and considers additional environmental aspects. It is also considered that the precursor does not include one, more or all of pyrrole acetylene, and thiophene.

In this context, the poly-isocyanates are preferably from the group of diphenyl-di-isocyanates, most preferably from the group of methylene-diphenyl-di-isocyanates (MDI).

The polyisocyanates as organic precursor compounds preferably comprise "unblocked" or "blocked" isocyanates. "Blocked" isocyanates are reaction products of isocyanates with, for example, phenols, oximes, caprolactam or β-dicarbonyl compounds, which thermally dissociate at higher temperature to set free the original isocyanate group. Furthermore the blocked isocyanates are stable when in contact with water e.g. in dip solutions. Since during the atmospheric plasma treatment no water is present, unblocked polyisocyanates can be used as well.

In a further preferred embodiment, the first substance is a latex compound. Namely, it was found out that, with the concept of the invention, no further resorcinol/formaldehyde ingredients are required to provide sufficient balancing properties of the transition zone. Preferably, the latex compound is applied as dip, said dip preferably not comprising substances other than latex compounds which are involved in the adhesion effect of the transition zone with more than 30 % contribution.

In a further preferred embodiment, the latex compounds contain at least one compound selected from the group of vinyl-pyridine (VP) latex, styrene-butadiene (SBR) latex, carboxylated styrene-butadiene (XSBR) latex, natural rubber (NR) latex or combinations thereof, in particular a styrene butadiene vinylpyridine latex. The total solid content inside the latex compound is preferably between 10 to 40 wt%, more preferably between 10 and 20 wt%. The latex dip is preferably prepared by diluting the concentrated latex emulsion with soft water to a total solid content of 20 wt% ± 5%. The relative weight% content of latex in the transition zone is preferably more than 40%, in particular more than 60%.

As already mentioned, the reinforcement material is environmental-friendly in that the transition zone may contain less than 4%, preferably less than 2.5%, in particular less than 1% of resorcinol and/or formaldehyde (parts (dry) with respect to the dip), and contains in particular no resorcinol and no formaldehyde.

In a further preferred embodiment, the transition zone material is composed of only the precursor and the latex compound. This provides a simple but effective combination of sufficient adhesion and balancing properties of the transition zone.

In terms of elastomeric products, the invention also protects such products reinforced by a reinforcing material according to any of the preceding aspects, in particular a pneumatic vehicle tire. However, also other elastomeric products may benefit from the reinforcing material according to the invention, such as, for instance, conveyor belts, hoses, driving belts or else.

The invention discloses also a method to provide the reinforcement material. That is, the invention provides a method for manufacturing a reinforcement material, in particular tire cord or tire cord fabric, for an elastomeric product comprising the steps of providing a reinforcing fiber construction, providing a transition zone material to be arranged and to form a transition zone between the fiber construction and a rubber matrix of the product, said transition zone material comprising a first substance to enable via vulcanization a first anchorage to the rubber matrix of the product and being in coupling contact with a second substance providing a second anchorage to the fiber construction, which is essentially characterized in that the coupling contact is made with already established second anchorage, by providing the second anchorage, in particular via atmospheric plasma polymerization, thereby in particular providing the second substance contained in a or as precursor of atmospheric plasma treatment, and applying the first substance only after said establishing of the second anchorage, in particular by dip-wetting, the second substance comprising or being in particular polyisocyanate.

Further preferable method steps aim at the provision of a reinforcement material in accordance with one or more of the precedingly discussed aspects of the transition zone and in accordance with one or more of the previously discussed methods and method steps.

Further advantages, embodiments and details of the invention can be taken from the subsequent description of embodiments with reference to the enclosed figures, wherein

Fig. 1 schematically shows substances used for manufacturing a reinforcement material, as well as manufacturing steps.

As is described in more detail under "Design of Embodiments" and "Results" for some embodiments of the invention, a first substance 1 being essentially a latex compound or a mixture of latex compounds being coupled to a second substance 2 by a dip process S2 only after the second substance 2 is grafted to a textile fiber construction 3 (which is provided in step S0) in a non-dipping step S1 via atmospheric plasma polymerization. That is, the dipping process S2 acts on intermediate material 32 where the second substance 2 is already anchored on fiber construction 3. The second substance 2 comprises or is preferably essentially a poly-isocyanate or a mixture of different poly-isocyanates used as precursor in atmospheric pressure plasma treatment S1. In a vulcanization step S4, the reinforcement material 321, after drying S3 subsequent to dipping S2, with fiber construction and transition zone material is connected to the rubber matrix 4 of the elastomeric product to be reinforced, or the respective part thereof. A pre-treatment, in particular an activating atmospheric plasma treatment could be performed between steps S0 and S1.

### Design of Embodiments:

The following commercially available cord materials were provided according to embodiments of the invention in step S0: Polyester (3340x2 dtex), Aramid (1670x2 dtex)
50 cm of each cord sample were irradiated in Step S1 by plasma generated in a PlasmaSpot® device from Molecular Plasma Group, Luxembourg, using a custom-made fiber nozzle at a treatment line speed of 4 m/min. The cord samples were passed between 1 and 10 times through the plasma. The power applied was varied between 60 Watt and 250 Watt.

As a precursor, Yokohama Hamatite GPI-1650-B primer comprising methylene diphenyl diisocyanate and ethyl acetate as solvent was used. It was fed into the plasma device at a rate of 1 to 10g per hour per cord in liquid state in the form of an aerosol.

The treated cords were then dipped in Step S2 in a dipping bath containing a styrene butadiene vinylpyridine latex (Omnova Pliocord VP106S) with a total solid content of 20% on a standard tire cord dipping line and dried in three subsequent ovens at 150°C, 230°C and 230°C respectively with a residence time of 50 seconds in each oven.

The effect of the plasma-assisted polymerization of the polyisocyanates in combination with the latex-dip on the adhesion of the tire cord was measured by cord-to-rubber adhesion (CRA). CRA was tested by preparing a test sample where five cords were embedded within a surface layer of a rubber sheet and vulcanized for 30 minutes at a temperature of 150° C while applying pressure to the rubber (S4). Subsequently, a load was applied to the cords until they were peeled from the rubber sheet. The value of this load therefore corresponds to the cord-to-rubber adhesion.

For comparison, adhesion values of plasma treated cords without subsequent dipping in a latex comprising solution were measured. Such direct bonding showed remarkably lower and therefore unsatisfactory adhesion values. The subsequent application of a dip containing latex to the plasma treated cords is hence significantly enhancing the adhesive strength.

Further reference samples were prepared and tested without the step of plasma-polymerization/deposition, but with the subsequent latex dipping step.

### Results of CRA:

**1) PET 3340x2 dtex**

| | Power (W) | Plasma Gas | Plasma gas flow (slm) | Number of passes | Concentration of precursor (% of original Yokohama primer solution) | Latex dip | CRA value (N/cord) |
|---|---|---|---|---|---|---|---|
| Sample 1 | 250 | N₂ | 80 | 10 | 100% | yes | 8,7 |
| Sample 2 | 60 | Ar | 60 | 10 | 25% | yes | 10,0 |
| Sample 3 | 60 | Ar | 60 | 1 | 25% | yes | 5,2 |
| Comparative sample 1 | 250 | N₂ | 80 | 10 | 100% | no | 1,8 |
| Comparative sample 2 | 60 | Ar | 60 | 10 | 25% | no | 1,6 |
| Comparative sample 3 | 60 | Ar | 60 | 1 | 25% | no | 1,5 |
| Comparative sample 4 | No plasma | | | | -- | yes | 3,3 |

**2) Aramid 1670x2 dtex**

| | Power (W) | Plasma Gas | Plasma gas flow (slm) | Number of passes | Concentration of precursor (% of original Yokohama primer solution) | Latex dip | CRA value (N/cord) |
|---|---|---|---|---|---|---|---|
| Sample 1 | 60 | Ar | 60 | 1 | 100% | yes | 4,7 |
| Sample 2 | 60 | Ar | 60 | 3 | 100% | yes | 5,2 |
| Sample 3 | 60 | Ar | 60 | 6 | 100% | yes | 5,0 |
| Sample 4 | 250 | N₂ | 80 | 1 | 100% | yes | 5,2 |
| Sample 5 | 250 | N₂ | 80 | 3 | 100% | yes | 11,7 |
| Sample 6 | 250 | N₂ | 80 | 6 | 100% | yes | 8,9 |
| Sample 7 | 250 | N₂ | 80 | 1 | 25% | yes | 9,2 |
| Sample 8 | 250 | N₂ | 80 | 3 | 25% | yes | 11,7 |
| Sample 9 | 250 | N₂ | 80 | 6 | 25% | yes | 8,0 |

All comparative aramid samples (direct bonding without latex dip) showed adhesion values between 0.6 and 1.6 N/cord. The reference sample without plasma treatment but with latex dip resulted in an adhesion value of only 2.8 N/cord.

For both cord materials an increased adhesion could be observed by the combined effect of plasma assisted polymerization/deposition using polyisocyanates as precursor and the latex dip. Regarding PET, low power value for plasma generation (60W) and a relatively low precursor amount (25% of the original concentration) were sufficient to reach adhesion values more than five times higher than the comparative sample with no latex dip.

Regarding the aramid cord, best adhesion results in this experimental test were reached by using a power value of 250 W and a relatively low number of passes through the plasma. Also in this case, a relatively low precursor concentration (25% of the original concentration) seems to be sufficient to reach the same adhesion values as with the original concentration.

It is understood that the fiber construction is not limited to said single cords, for instance an hybrid cord could be used, made f.i. of said aramid and polyester yarn, f.i. from PET, or other constructions/materials can be used, as discussed above.

The invention is not limited to the details given in the above illustrative examples. Rather, the features of the above description and/or the following claims can, alone or in combination, be essential for the invention.

## Claims

1. Reinforcement material (321), in particular tire cord or tire cord fabric, for an elastomeric product (3214), comprising
a reinforcing fiber construction (3) and
a transition zone material to be arranged and to form a transition zone between the fiber construction (3) and a rubber matrix (4) of the product and comprising a first substance (1) to enable, via vulcanization, a first anchorage to the rubber matrix (4) of the product and being in coupling contact with a second substance (2) providing a second anchorage to the fiber construction (3),
**characterized in that** the coupling contact is a coupling contact made with already established second anchorage.

2. Reinforcement material according to claim 1, wherein a density-difference between the density of the second and the density of the first substance in the transition zone decreases from the fiber material surface of the fiber construction to the outer surface of the reinforcement material.

3. Reinforcement material according to claim 1 or 2, having a, in particular only one boundary, which results from a dip-wetting, between the fiber material of its fiber construction and its outer surface.

4. Reinforcement material according to any of the preceding claims, wherein the transition zone material extends to regions at the fiber material of the fiber construction with average density of second anchorage less than half of the average density of the density distribution of the second anchorage at the outer surface of the fiber construction.

5. Reinforcement material according to any of the preceding claims, wherein the second substance comprises at least two, preferably two separated docketing areas.

6. Reinforcement material according to any of the preceding claims, wherein the second anchorage is made via atmospheric plasma polymerization.

7. Reinforcement material according to claim 5, wherein the second substance is contained in a or is a precursor of the plasma treatment.

8. Reinforcement material according to any of claims 5 to 7, wherein the precursor contains or is and/or the second substance is a substance able to form or contribute to the forming of urethane bonds, preferably polyisocyanate, in particular diisocyanate.

9. Reinforcement material according to claim 8, wherein the polyisocyanates are from the group of diphenyl diisocyanates, most preferably from the group of methylene diphenyl diisocyanates (MDI).

10. Reinforcement material according to any of the preceding claims, wherein the first substance (1) is a latex compound.

11. Reinforcement material according to claim 10, wherein the latex compound contains at least one compound selected from the group of vinyl-pyridine (VP) latex, styrene-butadiene (SBR) latex, carboxylated styrene-butadiene (XSBR) latex, natural rubber (NR) latex or combinations thereof, in particular a styrene butadiene vinylpyridine latex.

12. Reinforcement material according to any of the preceding claims, wherein the transition zone part resulting from the dip with the first substance contains less than 4%, preferably less than 2.5%, in particular less than 1% of resorcinol and/or formaldehyde, and in particular no resorcinol and/or formaldehyde.

13. Reinforcement material according to claim 1, wherein the transition zone material is composed of only the precursor and the latex compound.

14. Elastomeric product, in particular a tire, reinforced by a reinforcing material according to any of the preceding claims.

15. Method for manufacturing a reinforcement material, in particular tire cord or tire cord fabric, for an elastomeric product comprising the steps of (S0) providing a reinforcing fiber construction, providing a transition zone material to be arranged and to form a transition zone between the fiber construction and a rubber matrix of the product, said transition zone material comprising a first substance to enable via vulcanization a first anchorage to the rubber matrix of the product and being in coupling contact with a second substance providing a second anchorage to the fiber construction, **characterized in that** the coupling contact is made with already established second anchorage, by providing (S1) the second anchorage, in particular via atmospheric plasma polymerization, thereby in particular providing the second substance contained in a or as precursor of atmospheric plasma treatment, and applying (S2) the first substance only after said establishing of the second anchorage, in particular by dip-wetting.
